Europäisches Patentamt

European Patent Office

Office européen des brevets

(11) Publication number: **0 055 597**
**B1**

# (12) EUROPEAN PATENT SPECIFICATION

(45) Date of publication of patent specification: **15.03.89**

(21) Application number: **81306066.2**

(22) Date of filing: **23.12.81**

(51) Int. Cl.⁴: **B 62 M 3/08**

(54) **Cycle pedal with main and auxiliary supports.**

(30) Priority: **28.12.80 JP 188819/80 u**

(43) Date of publication of application:
**07.07.82 Bulletin 82/27**

(45) Publication of the grant of the patent:
**15.03.89 Bulletin 89/11**

(84) Designated Contracting States:
**BE DE FR GB IT**

(56) References cited:
**CH-A- 256 750**
**CH-A- 290 481**
**FR-A-2 440 866**
**FR-A-2 440 867**
**US-A-2 542 548**

(73) Proprietor: **SHIMANO INDUSTRIAL COMPANY LIMITED**
**77, 3-cho Oimatsu-cho Sakai-shi**
**Osaka (JP)**

(72) Inventor: **Shimano, Keizo**
**81, 3-cho, Midorigaoka-Minamimachi**
**Sakai-shi Osaka (JP)**

(74) Representative: **Szczuka, Jan Tymoteusz et al**
**Cruikshank & Fairweather 19 Royal Exchange Square**
**Glasgow G1 3AE Scotland (GB)**

Courier Press, Leamington Spa, England.

## Description

This invention relates to a cycle pedal comprising a pedal body having a pedal shaft, said body having an upper surface on which are provided first and second foot support surfaces.

In general pedal bodies for cycle pedals as disclosed for example in United States Patent No. 2,542,548 and Swiss Patent No. 279,819, have foot support portions provided on either side of a pedal shaft and extending parallel thereto.

The foot support surfaces are disposed relative to each other so that in general only forward portions (towards the phalanges) of the metatarsi are supported so that when a cyclist places his foot on the pedal body the rear ends (towards the tarsus) of the metatarsi are substantially unsupported and tend to come out of contact with said support surfaces.

The skeleton of the human foot comprises an assembly of 26 bones, which are roughly divided from the point of view of construction, into tarsi, metatarsi, and phalanges. The tarsi are composed of seven bones of the calcaneous, talsus, cuboid, navicular, and first to third cumeiforms in a tightly knit combination, the metatarsi comprising five bones corresponding in number to the toes and extending forwardly from the group of tarsal bones and arranged laterally across the foot, the phalanges extending forwardly from the metatarsi and comprising 14 bones with the first phalange of the big toe comprising two bones and the second to fifth phalanges of the other toes each comprising three bones respectively.

The talus carries through the tibis the main weight of the body of a person standing on the foot and distributes it to the metarsi through the navicular and cuboid and to the calcaneus.

Thus when a cyclist treads down on the pedal, he transmits a pedalling force to the pedal body through the tarsi and metatarsi, but not through the calcaneus which is not supported by the pedal body.

From the point of view of the above described bone structure, the rider transmits his pedalling force to the pedal body only through the heads of metatarsi at the phalange side and smoothly manouevres his ankle joint to achieve a proper pedalling action. Since however the arched structure of the metatarsi and tarsi carries a heavy load, the cyclist tires relatively quickly so that he is unable to transmit a large pedalling force to the pedal body, especially when starting the cycle or riding it uphill, without tiring.

It is possible simply to increase the spacing between the front and rear foot support surfaces to either side of the pedal shaft axis as for example in the pedal of FR—A—2440867 which comprises a pedal body having a pedal shaft, a first foot support in proximity to the pedal shaft axis providing an extended area generally planar main support surface and a second foot support formed and disposed so as to extend in relation to the pedal shaft axis rearwardly of an axially outer portion of said first foot support and pedal shaft axis and providing a generally planar auxiliary support surface, at least said axially outer portion of said first foot support extending across the pedal shaft axis as seen in plan view of the pedal. In this case, however, the head portions of the metatarsi and the tarsi, are always brought into contact with both the foot support surfaces so that the pedalling force cannot be applied only to head portions of the metatarsi towards the phalanges. Thus the possible solution of the above described problem of obtaining a larger pedalling force simply gives rise to another problem in that a less smooth action of the ankle is obtained leading to an incorrect pedalling action unsuitable for high speed cycling.

It is an object of the present invention to avoid or minimise one or more of the above problems.

This invention provides a cycle pedal which pedal comprises a pedal body having a pedal shaft, a first foot support in proximity to the pedal shaft axis providing an extended area generally planar main support surface and a second foot support formed and disposed so as to extend in relation to the pedal shaft axis rearwardly of an axially outer portion of said first foot support and pedal shaft axis and providing a generally planar auxiliary support surface, at least said axially outer portion of said first foot support extending across the pedal shaft axis as seen in plan view of the pedal, characterised in that said first foot support comprises first and second foot support surfaces, said first foot support surface being formed and arranged in proximity to the pedal shaft and said second foot support surface being formed and arranged so as to extend in relation to the pedal shaft axis axially outwardly and rearwardly of said first support surface, and characterised in that said second foot support is spaced further from said pedal shaft axis than said first foot support and extends only behind the second support surface of the first foot support.

In a further aspect the present invention provides a cycle pedal which pedal comprises a pedal body having a pedal shaft, a first foot support in proximity to the pedal shaft axis providing an extended area generally planar main support surface and a second foot support formed and disposed so as to extend in relation to the pedal shaft axis rearwardly of an axially outer portion of said first foot support and pedal shaft axis and providing a generally planar auxiliary support surface, at least said axially outer portion of said first foot support extending across the pedal shaft axis as seen in plan view of the pedal, characterised in that said first foot support comprises separate first and second foot support surfaces said first foot support surface being formed and arranged in proximity to the pedal shaft and said second foot support portion surface being formed and arranged so as to extend in relation to the pedal shaft axis generally arcuately axially outwardly and rearwardly of said first support portion, and characterised in that said second foot support is spaced further from said pedal shaft axis than said first foot support.

With a pedal of the present invention a larger pedalling force can be transmitted to the pedal body by applying the same through both the forward (phalange side) and rearward (tarsus side) portions of the rider's foot.

Further preferred features and advantages of the present invention will appear from the following detailed description given by way of example of a preferred embodiment illustrated with reference to the accompanying drawings.

Fig. 1 is a partial plan view of a pedal of the present invention.

Fig. 2 is a partial transverse sectional elevation taken on the line II—II in Fig. 1;

Fig. 3 is a longitudinal sectional elevation taken on the line III—III in Fig. 1;

Fig. 4 is a rear view of a rear side plate alone of the pedal of Fig. 1;

Fig. 5 is a plan view illustrating the mode of support of a cyclist's foot on the pedal of Figs. 1 to 4; and

Fig. 6 is a longitudinal sectional elevation of the arrangement of Fig. 5.

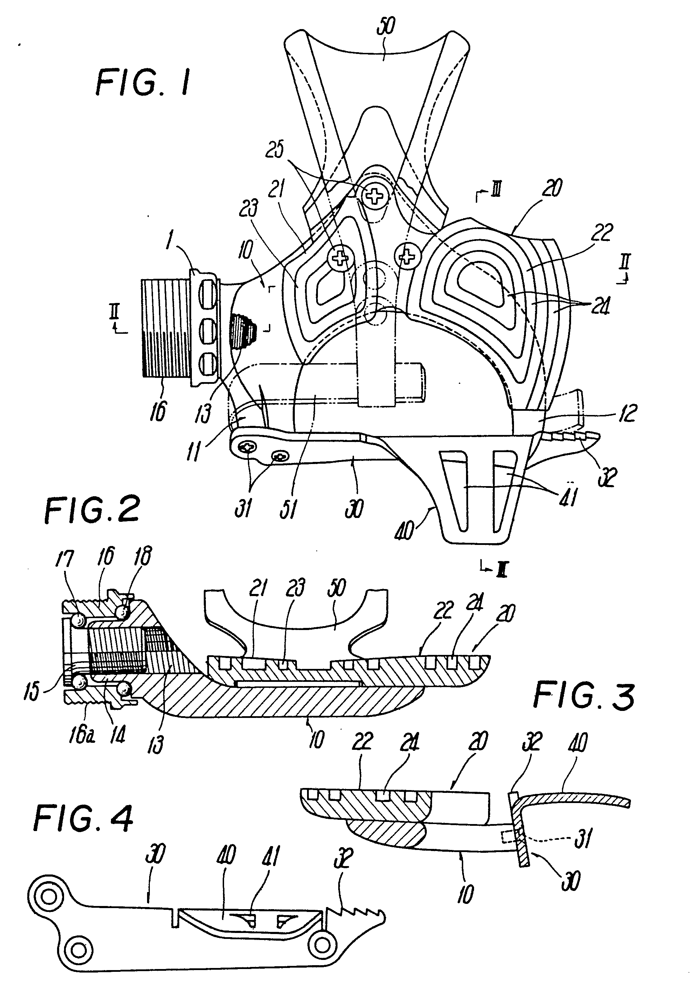

Fig. 1 shows a right-hand side pedal having a generally block-shaped pedal body 10 formed of an aluminum alloy by die casting, and a first-foot support in the form of a generally plate-form foot support member 20 and a second foot support in the form of a rear side plate member 30, which members are formed separately from the main pedal body 10, also being formed of an aluminum alloy, by die casting, and secured to the pedal body 10.

The pedal body 10 as viewed in Fig. 1 is in the form of a generally V-shaped member with the apex of the V-shape projecting forwardly at a laterally intermediate position and the limbs 11, 12 of the V-shape extending rearwardly at either side, the rear side plate 30 being attached to the limbs 11 and 12 of the main pedal body 10 with the aid of fixing means 31, such as screws. The pedal body 10 is also provided at one lateral side (the left side in Fig. 1) with a tubular portion 14 having a threaded bore 13 as shown in Fig. 2, for screw threaded engagement with a pedal shaft 15.

As shown in Fig. 2 a tubular bearing 16 is rotatably supported on the pedal shaft 15 and the tubular pedal body portion 14 via ball bearings 17 and 18, and has at its outer periphery a screw threaded portion 16a for screw threaded engagement with the distal end of a crank arm (not shown) of a cycle, to rotatably support the pedal body 10 on the crank arm.

The foot support member 20 and rear side plate member 30 provide respectively a main foot support surface and an auxiliary foot support surface, respectively.

In more detail, the foot support member 20 is fixed to the upper surface of pedal body 10 with the aid of fixing means 25, such as screws and provides a main foot support surface comprising a first support portion 21 and a second support portion 22. The first support portions 21 supports the head portion $T_1$ of a first metatarsus $K_1$ of the cyclist's foot (corresponding to the big toe) and the second support portion 22 supports the head portions $T_3$ to $T_5$ of the third to fifth metatarsi $K_3$ to $K_5$, so that, when the first metatarsus head portion $T_1$ is brought into contact with the first support portion 21, the head portions $T_3$ to $T_5$ are automatically in a position to be supported by the second support portion 22. In addition, the second support portion 22, as shown in Fig. 1, is formed to have an area sufficiently large to substantially accommodate the head portions $T_3$ to $T_5$ of the third to fifth metatarsi $K_3$ to $K_5$. If desired it can even be made sufficiently large to accommodate the head portions $T_2$ to $T_5$ of second to fifth metatarsi $K_2$ to $K_5$, alternatively only large enough to accommodate the head portion $T_5$ of the fifth metatarsus $K_5$.

The above mentioned first and second support portions 21 and 22 together constitute the front foot support of the main foot support surface, and may be formed on the upper surface of the aforesaid separate foot support member 20, or provided directly on the main pedal body upper surface. Also, they project upwardly above the upper surface of the pedal body 10 and are provided with a plurality of grooves 23 and 24 extending, for example, longitudinally and bilaterally, so that the edges of said grooves 23 and 24 serve to prevent the cyclist's foot from skidding. If the grooves 23 and 24 are loop-form an even more effective anti-skidding performance is obtained.

As may be seen the first and second support portions 21 and 22 each have the greater part thereof disposed in front of and in close proximity to the pedal shaft axis, the remaining part being to the rear thereof, i.e. they extend over the pedal shaft axis at their rear ends when the pedal is seen in plan view, through the second support portion 22 so extends to a greater degree.

In the embodiment shown in Fig. 1, the rear side plate member 30 provides at its upper edge a rear foot support 32 at the rear of the main foot support surface as well as providing an auxiliary foot support surface 40 which is an essential element of the present invention.

In detail, the rear side plate member 30 is generally plate-form having a reduced width rearwardly cranked portion which extends in a rearward direction behind the second support portion 22 only to provide the auxiliary foot support surface 40.

The auxiliary foot support surface 40 extends longitudinally of the pedal body 10, to support the metatarsi of the cyclist's foot at the tarsus $N$ ends thereof and laterally so as to support mainly the third and fourth metatarsi or the fourth and fifth metatarsi at the tarsus $N$ ends thereof.

The precise width of the auxiliary foot bearing surface 40 is not critical but in accordance with the present invention, the auxiliary foot support surface 40 is cut away on the side underneath the first and second metatarsi because they are of a substantially more arched structure as compared with the other metatarsi and extends substantially only behind the second support portion 22. Also, it is not essential to provide apertures 41 in the auxiliary foot support surface 40 as shown in Fig. 1. The auxiliary foot support surface 40 shown above as being formed integrally with the rear side plate member 30 could instead be formed integrally with the pedal body 10, or even formed separately from both the rear side plate member 30 and the pedal body 10.

The drawings also show a toe clip, provided with a two strap 51. The toe clip 50 is fixedly clamped at one end between the laterally intermediate front portions of the main body 10 and the foot support member 20 with the aid of the fixing means 25 and is connected at its other end with an intermediate portion of the two strap 51, in a longitudinally movable manner at the root of the toe clip 50.

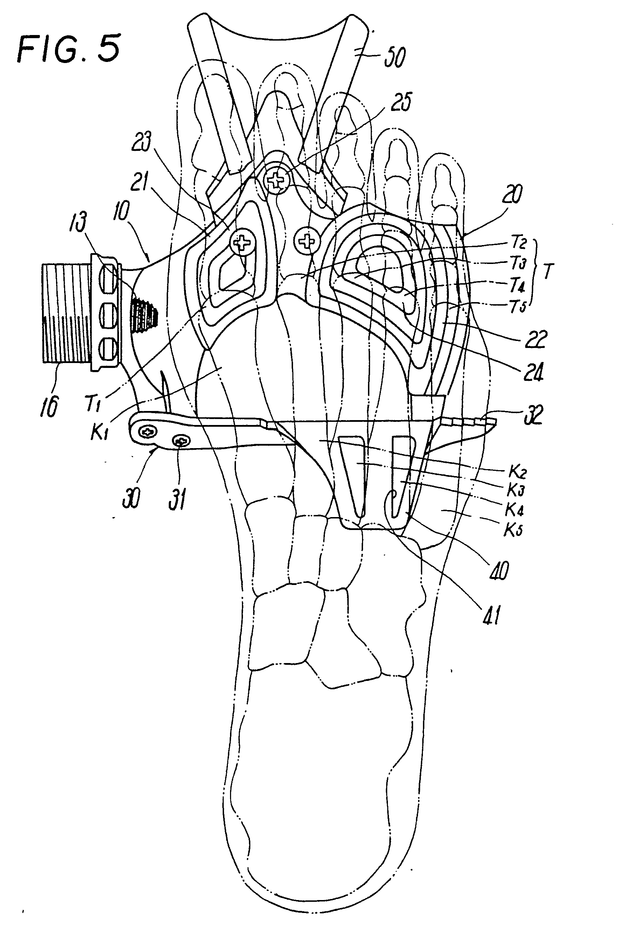

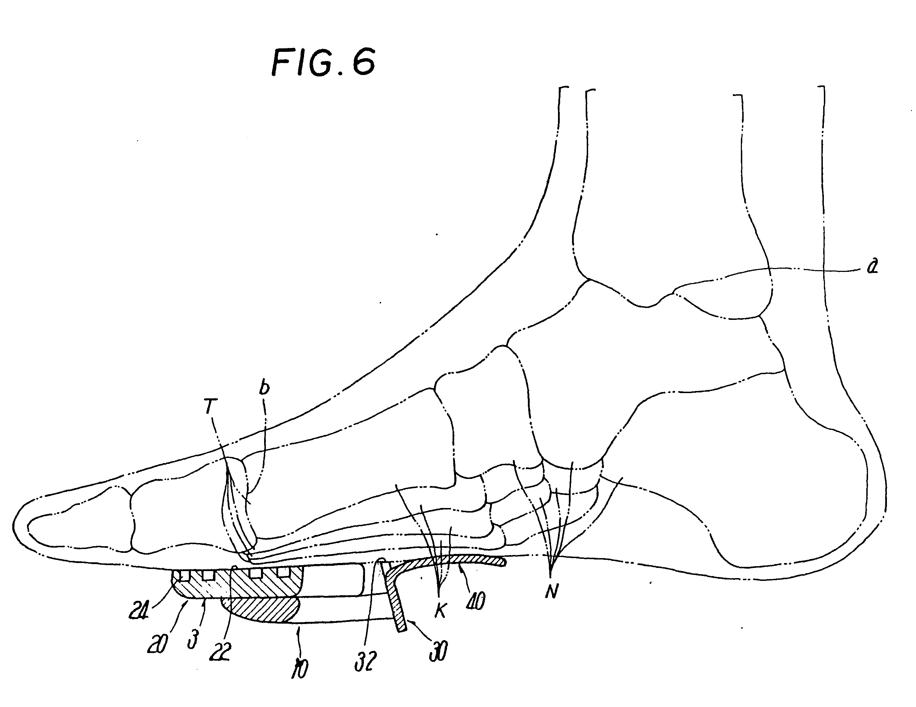

In the above described pedal of the present invention, when the head portion $T_1$ of the first metatarsus $K_1$, as shown in Figs. 5 and 6, is brought into contact with the first support portion 21 of the main support surface, the head portions $T_3$ and $T_5$ of the third to fifth metatarsi $K_3$ to $K_5$ are automatically brought into contact with the second support portion 22 thereof. In this condition the cyclist treads down on the pedal body 10 to propel the cycle forwards.

Thus, when riding a cycle, for example, at high speed on a level road, the cyclist performs a pedalling action in which he tends to raise his heel from the auxiliary foot support surface 40, because a very large pedalling force is not necessary. In this situation the metatarsi $K$ and tarsi $N$ between the ankle joint $a$ and the joints $b$ of the phalanges $U$, as shown in Fig. 6, are held in a substantially arched deposition, so that the pedalling force is transmitted to the pedal body 10 only through the head portions $T_1$ and $T_3$ to $T_5$ of the metatarsi $K_1$ and $K_3$ to $K_5$ and the cyclist is able to maintain a smooth pedalling action at high speed with a smooth ankle action.

On the other hand, when riding off or riding uphill and applying a relatively large pedalling thereof the rider is able to bring the metatarsi $K$ at the tarsus ends thereof also into contact with the auxiliary foot support surface 40 simultaneously with support of the head portions $T$ of the metatarsi $K$ on the first and second support portions 21 and 22, thereby applying a significantly larger pedalling force to the pedal body 10 through both the main foot support surface and the auxiliary foot support surface 40 simultaneously with each other.

In this situation, the metatarsi $K$ at both their phalange and tarsus ends can be effective in transmitting a pedalling force to the pedal body 10, so that the arching of the foot bone structure is reduced and the load thereon decreased. As a result the rider is less fatigued whilst at the same time being able reliably to apply a larger pedalling force to the pedal body 10.

In addition when the cyclist is not pedalling or is treading down on the auxiliary foot support surface 40 as well as on the main foot support surface, the rear foot support surface 32 comes into contact with rear portions of the metatarsi $K$ to hold the cyclist's foot in a relatively stable condition.

As will be apparent from the above, the pedal of the invention is provided at the rear of the pedal body behind the main foot support surface and in the vicinity of the pedal shaft, with an auxiliary foot support surface for supporting the metatarsi of a cyclist's foot at the tarsus ends thereof during the pedalling. As a result the cyclist can pedal at high speeds by treading down on the main foot support surface only and arching the metatarsi and tarsi between the ankle joint and the joints of phalanges. At the same time the metatarsi at the tarsus ends thereof are brought into contact with the auxiliary foot support surface when a large pedalling force has to be applied. In this case the pedalling force can be applied to the foot support surfaces of the pedal by the metatarsi at both their phalange and their tarsus ends with reducing arching and loading of the foot bone structure and hence reduced tiring of the cyclist even when applying a large pedalling force to the pedal body.

## Claims

1. A cycle pedal which pedal comprises a pedal body (10) having a pedal shaft (15), a first foot support in proximity to the pedal shaft axis providing an extended area generally planar main support surface and a second foot support (30) formed and disposed so as to extend in relation to the pedal shaft axis rearwardly of an axially outer portion (22) of said first foot support (20) and pedal shaft axis and providing a generally planar auxiliary support surface (40), at least said axially outer portion of said first foot support extending across the pedal shaft axis as seen in plan view of the pedal, characterised in that said first foot support comprises first and second foot support surfaces (21, 22), said first foot support surface being formed and arranged in proximity to the pedal shaft and said second foot support surface (22) being formed and arranged so as to extend in relation to the pedal shaft axis axially outwardly and rearwardly of said first support surface (21), and characterised in that said second foot support (40) is spaced further from said pedal shaft axis than said first foot support and extends only behind the second support surface (22) of the first foot support (20).

2. A cycle pedal which pedal comprises a pedal body (10) having a pedal shaft (15), a first foot support in proximity to the pedal shaft axis providing an extended area generally planar main support surface and a second foot support (30) formed and disposed so as to extend in relation to the pedal shaft axis rearwardly of an axially outer portion (22) of said first foot support (20) and pedal shaft axis and providing a generally planar auxiliary support surface (40), at least said axially outer portion (22) of said first foot support extending across the pedal shaft axis as seen in plan view of the pedal, characterised in that said first foot support comprises separate first and second foot support surfaces (21, 22) said first foot support surface being formed and arranged in proximity to the pedal shaft and said second foot support portion surface (22) being formed and arranged so as to extend in relation to the pedal shaft axis generally arcuately axially outwardly and rearwardly of said first support portion (21), and characterised in that said second foot support (40) is spaced further from said pedal shaft axis than said first foot support.

3. A pedal according to claim 2 wherein said auxiliary support surface (40) extends substantially only behind said second support portion (22).

4. A pedal according to any one of claims 1 to 3 wherein said pedal body (10) is in the form of a generally 'V'-shaped member projecting forwardly at its apex portion with its limbs (11, 12) extending rearwardly, one of said limbs (11) being connected (13) at its outer side to the pedal shaft (15).

5. A pedal according to any one of claims 1 to 4 wherein said first and second support portions (21, 22) are inclined slightly inwardly towards each other so as to form together a very shallow generally 'V'-shaped main support surface (20).

6. A pedal according to any one of claims 1 to 5 wherein is provided between said main and auxiliary support surfaces (21, 22 and 40) towards an axially outward side thereof, a support means (32) formed and arranged for stabilising the foot, in use of the pedal, during heavy pedalling or resting of the foot on both of the main and auxiliary support surfaces (21, 22 and 40).

7. A pedal according to any one of claims 1 to 6 wherein said pedal body (10) is provided with a separately formed rear side plate (30) detachably secured to the rear portion of the main pedal body member (10), said rear side plate (30) extending upwardly to provide a fixing portion and then being cranked rearwardly to provide said auxiliary support surface (40).

8. A pedal according to any one of claims 1 to 7 wherein said first foot support (20) is formed separately from said pedal body (10) and is detachably secured thereto.

9. A pedal according to any one of claims 1 to 7, wherein said first foot support (20) is formed integrally with said pedal body (10).

10. A pedal according to any one of claims 1 to 9 wherein said main support surface (21, 22) is provided with a plurality of grooves (23, 24).

11. A pedal according to claim 10, wherein said grooves (23, 24) comprise longitudinally and bilaterally extending portions and are generally loop-form.

12. A pedal according to any one of claims 1 to 11, wherein said first and second support portions (21, 22) extend in substantially direct proximity to a plane through the pedal shaft axis (X—X) and project upwardly from the main pedal body (10).

**Patentansprüche**

1. Fahrradpedal, welches einem Pedalkörper (10) aufweist, mit einer Pedalwelle (15), einer ersten Fußstütze in der Nähe der Pedalwellenachse, die eine allgemein ebene Haupttrittfläche mit ausgedehnter Flächenerstreckung bildet, und einer zweiten Fußstütze (30), die derart ausgebildet und angeordnet ist, daß sie sich in bezug auf die Pedalwellenachse von einem axial außen liegenden Abschnitt (22) der ersten Fußstütze (20) und der Pedalwellenachse nach hinten erstreckt und eine allgemein ebene Hilfsstützfläche (40) bildet, wobei sich wenigstens der axial außen liegende Abschnitt der ersten Fußstütze über die Pedalwellenachse hinweg erstreckt, wie aus der Draufsicht auf das Pedal zu ersehen ist, dadurch gekennzeichnet, daß die erste Fußstütze eine erste und eine zweite Fußstützfläche (21, 22) aufweist, die erste Fußstützfläche in der Nähe der Pedalwelle ausgebildet und angeordnet ist und die zweite Fußstützfläche (22) derart ausgebildet und angeordnet ist, daß sie sich in bezug zur Pedalwellenachse axial nach außen und nach hinten von der ersten Stützfläche (21) erstreckt, und dadurch gekennzeichnet, daß die zweite Fußstütze (40) weiter von der Pedalwellenachse beabstandet ist, als die erste Fußstütze und sich nur hinter der zweiten Stützfläche (22) der ersten Fußstütze (20) erstreckt.

2. Fahrradpedal, welches einen Pedalkörper (10) aufweist, mit einer Pedalwelle (15), einer ersten Fußstütze in der Nähe der Pedalwellenachse, die eine allgemein ebene Haupttrittfläche mit ausgedehnter Flächenerstreckung bildet, und einer zweiten Fußstütze (30), die derart ausgebildet und angeordnet ist, daß sie sich in bezug auf die Pedalwellenachse von einem axial außen liegenden Abschnitt (22) der ersten Fußstütze (20) und der Pedalwellenachse nach hinten erstreckt und eine allgemein ebene Hilfsstützfläche (40) bildet, wobei sich wenigstens der axial außen liegende Abschnitt (22) der ersten Fußstütze über die Pedalwellenachse hinweg erstreckt, wie aus der Draufsicht auf das Pedal zu ersehen ist, dadurch gekennzeichnet, daß die erste Fußstütze voneinander getrennt eine erste und eine zweite Fußstützfläche (21, 22) aufweist, die erste Fußstützfläche in der Nähe der Pedalwelle ausgebildet und angeordnet ist und die zweite Fußstützfläche (22) derart ausgebildet und angeordnet ist, daß sie sich in bezug auf die Pedalwellenachse allgemein bogenförmig axial nach außen und nach hinten von dem ersten Stützabschnitt (21) erstreckt, und dadurch gekennzeichnet, daß die zweite Fußstütze (40) weiter von der Pedalwellenachse beabstandet ist, als die erste Fußstütze.

3. Pedal nach Anspruch 2, dadurch gekennzeichnet, daß die Hilfsstützfläche (40) sich im wesentlichen lediglich hinter dem zweiten Stützabschnitt (22) erstreckt.

4. Pedal nach irgendeinem der Ansprüche 1—3, dadurch gekennzeichnet, daß der Pedalkörper (10) die Form eines im allgemeinen V-förmigen Teiles hat, das sich mit seiner Spitze nach vorn und mit seinen Schenkeln (11, 12) nach hinten erstreckt, wobei einer der Schenkel (11) an seiner Außenseite mit der Pedalwelle (15) verbunden ist.

5. Pedal nach irgendeinem der Ansprüche 1—4, dadurch gekennzeichnet, daß der erste und zweite Stützabschnitt (21, 22) seitlich nach innen zueinander geneigt sind, um zusammen eine sehr flache, allgemein V-förmige Hauptstützfläche (20) zu bilden.

6. Pedal nach irgendeinem der Ansprüche 1—5, dadurch gekennzeichnet, daß zwischen der Haupt- und Hilfsstützfläche (21, 22 und 40), in Richtung einer axial außen liegenden Seite von diesen, ein Stützmittel (32) ausgebildet und angeordnet ist, um bei Gebrauch des Pedals während starken Tretens oder Auflegens des Fußes auf beide, die Haupt- und Hilfsstützfläche (21, 22 und 40), diesen zu stabilisieren.

7. Pedal nach irgendeinem der Ansprüche 1—6, dadurch gekennzeichnet, daß der Pedalkörper (10) mit einer getrennt ausgebildeten Rückseitenplatte (30) versehen ist, die abnehmbar am hinteren Abschnitt des Hauptpedalkörperteils (10) befestigt ist, wobei sich die Rückseitenplatte (30) nach oben erstreckt, um einen Befestigungsabschnitt zu bilden und dann rückwärts gekröpft ist, um die Hilfsstützfläche (40) zu bilden.

8. Pedal nach irgendeinem der Ansprüche 1—7, dadurch gekennzeichnet, daß die erste Fußstütze (20) getrennt von dem Pedalkörper (10) ausgebildet und daran abnehmbar befestigt ist.

9. Pedal nach irgendeinem der Ansprüche 1—7, dadurch gekennzeichnet, daß die erste Fußstütze (20) einstückig mit dem Pedalkörper (10) ausgebildet ist.

10. Pedal nach irgendeinem der Ansprüche 1—9, dadurch gekennzeichnet, daß die Hauptstützfläche (21, 22) mit einer Mehrzahl von Rillen (23, 24) versehen ist.

11. Pedal nach irgendeinem der Ansprüche 1—10, dadurch gekennzeichnet, daß die Rillen (23, 24) längsgerichtete und nach zwei Seiten gerichtete Abschnitte aufweisen und allgemein eine Schleifenform haben.

12. Pedal nach irgendeinem der Ansprüche 1—11, dadurch gekennzeichnet, daß sich der erste und zweite Stützabschnitt (21, 22) im wesentlichen in unmittelbarer Nähe zu einer Ebene durch die Pedalwellenachse (X—X) und nach oben von dem Hauptpedalkörper (10) erstrecken.

## Revendications

1. Pédale de bicyclette qui comprend un corps de pédale (10) muni d'un pivot de pédale (15), d'un premier support de pied à proximité de l'axe du pivot de pédale fournissant une surface étendue du support principal, généralement plane et un second support de pied (30), formé et agencé de façon à s'étendre par rapport à l'axe du pivot de pédale vers l'arrière d'une portion extérieure axialement (22) du premier support de pied (20) et de l'axe du pivot de la pédale et fournissant une surface du support auxiliaire généralement plane (40), au moins cette portion extérieure du premier support de pied s'étendant au travers de l'axe du pivot de la pédale comme cela ressort de la vue en plane de la pédale, caractérisée en ce que le premier support de pied comprend des première et seconde surfaces de support de pied (21, 22) la première surface de support de pied étant formée et disposée à proximité du pivot de la pédale et la seconde surface de support de pied étant formée et agencée de façon à s'étendre par rapport à l'axe du pivot de pédale, axialement vers l'extérieur et vers l'arrière de la première surface de support (21), et caractérisée en ce que le second support de pied (40) est davantage espacé de l'axe du pivot de pédale que le premier support de pied et s'étend uniquement derrière la seconde surface de support (22) du premier support de pied (20).

2. Pédale de bicyclette qui comprend un corps de pédale (10) muni d'un pivot de pédale (15), un premier support de pied à proximité de l'axe du pivot de pédale fournissant une surface étendue de support principal, généralement plane et un second support de pied (30) formé et agencé de façon à s'étendre par rapport à l'axe géométrique de l'axe mécanique de la pédale vers l'arrière d'une portion extérieure axialement (22), du premier support de pied (20) et de l'axe du pivot de pédale, et fournissant une surface du support auxiliaire généralement plane (40), au moins la portion extérieure axialement (22) du premier support de pied s'étendant sur l'axe du pivot et la pédale comme cela ressort de la vue en plan de la pédale, caractérisée en ce que le premier support de pied comprend des première et seconde surfaces de support de pied (21, 22) la première surface du support de pied étant formée et agencée à proximité du pivot de pédale et la seconde surface du support de pied (22) étant formée et agencée de façon à s'étendre en relation avec l'axe du pivot de pédale, de façon générale en formant un arc axialement vers l'extérieur et vers l'arrière de la première portion de support (21), et caractérisée en ce que le second support de pied (40) est espacé davantage par rapport à l'axe du pivot de pédale que le premier support de pied.

3. Pédale selon la revendication 2, dans laquelle la surface de support auxiliaire (40) s'étend de façon sensible uniquement derrière la seconde portion de support (22).

4. Pédale selon l'une quelconque des revendications 1 à 3, dans laquelle le corps de pédale (10) a la forme d'un élément généralement en forme de V faisant saillie vers l'avant sur sa portion apicale avec ses branches (11, 12) s'étendant vers l'arrière, l'une de ces branches (11) étant reliée (13) à son côté extérieur au pivot de pédale (15).

5. Pédale selon l'une quelconque des revendications 1 à 4, dans laquelle les première et seconde portions de support (21, 22) sont inclinées légèrement vers l'intérieur en direction l'une de l'autre de façon à former conjointement une surface du support principal (30) généralement en forme de V, de très faible profondeur.

6. Pédale selon l'une quelconque des revendications 1 à 5, dans laquelle il est prévu entre les surfaces du support principal et auxiliaire (21, 22, 40) en direction d'un côté extérieur axialement de celles-ci, un moyen de support (32) formé et agencé pour stabiliser le pied, lors de l'utilisation de la pédale, au cours d'un pédalage intensif ou lorsque le pied repose à la fois sur les surfaces du support principal et auxiliaire (21, 22 et 40).

7. Pédale selon l'une quelconque des revendications 1 à 6, dans laquelle le corps de pédale (10) est muni d'une plaque latérale arrière formée séparément (30), fixée de façon amovible sur la portion arrière de l'élément de corps principal de pédale (10), cette plaque latérale arrière (30) s'étendant vers le haut pour fournir une portion de fixation et étant alors coudée vers l'arrière pour fournir la surface de support auxiliaire (40).

8. Pédale selon l'une quelconque des revendications 1 à 7, dans laquelle le premier support de pied (20) est formé séparément par rapport au corps de pédale (10) et fixé sur celui-ci de façon amovible.

9. Pédale selon l'une quelconque des revendications 1 à 7, dans laquelle le premier support de pied (20) est formé solidairement avec le corps de pédale (10).

10. Pédale selon l'une quelconque des revendications 1 à 9, dans laquelle la surface du support principal (21, 22) comporte plusieurs rainures (23, 24).

11. Pédale selon la revendication 10 dans laquelle les rainures (23, 24) comprennent des portions s'étendant longitudinalement et bilatéralement et qui sont de façon générale en forme de boucle.

12. Pédale selon l'une quelconque des revendications 1 à 11, dans laquelle les première et seconde portions du support (21, 22) s'étendent sensibleme, t à proximité directe d'un plan traversant l'axe géométrique (X · X) du pivot de pédale et font saillie vers le haut depuis le corps principal de pédale (10).

EP 0 055 597 B1

FIG. 1

FIG. 2

FIG. 3

FIG. 4

1

FIG. 5

FIG. 6